Europäisches Patentamt

European Patent Office

Office européen des brevets

(19)

(11) Veröffentlichungsnummer: **0 310 780**
**B1**

# EUROPÄISCHE PATENTSCHRIFT

(12)

(45) Veröffentlichungstag der Patentschrift:
**18.07.90**

(21) Anmeldenummer: **88112756.7**

(22) Anmeldetag: **05.08.88**

(51) Int. Cl.⁵: **B60B 33/00**

(54) **Laufrad, insbesondere für Rollen.**

(30) Priorität: **26.09.87 DE 3732505**

(43) Veröffentlichungstag der Anmeldung:
**12.04.89 Patentblatt 89/15**

(45) Bekanntmachung des Hinweises auf die Patenterteilung:
**18.07.90 Patentblatt 90/29**

(84) Benannte Vertragsstaaten:
**AT BE CH DE ES FR GB GR IT LI LU NL SE**

(56) Entgegenhaltungen:
**EP-A- 0 056 579**
**US-A- 4 592 595**

(73) Patentinhaber: **TENTE-ROLLEN GmbH & Co.,**
**Herlinghausen 75, D-5632 Wermelskirchen 1(DE)**

(72) Erfinder: **Güthe, Friedrich-Wilhelm, Bremen 14,**
**D-5632 Wermelskirchen 2(DE)**

(74) Vertreter: **Rieder, Hans-Joachim, Dr. et al,**
**Corneliusstrasse 45 Postfach 11 04 51,**
**D-5600 Wuppertal 11(DE)**

**Beschreibung**

Die Erfindung bezieht sich auf ein Laufrad, insbesondere für Rollen, mit einem Felgenkörper aus spritzgußfähigem Kunststoff und einer darauf aufgebrachten Bereifung aus thermoplastischem Kautschuk.

Ein Laufrad dieser Art ist Gegenstand der nicht veröffentlichten Patentanmeldung P 36 26 246.3 der Anmelderin. Diese Lösung zeichnet sich durch hohen innigen Verbund beider laufradbildenden Komponenten aus. Selbst extreme Belastungen, wie sie beim Schwenken des Radkörpers unter Hochlast oder bei Erdberührung von Fluggeräten auftreten, werden schadfrei toleriert. Gerade auch auf dem Flugsektor ist es andererseits aber erstrebenswert, eine hohe Hitze- und Flammbeständigkeit, das heißt Schwerentflammbarkeit solcher Laufräder zu erzielen.

Aufgabe der Erfindung ist es, diese Eigenschaften ohne Abstriche am Zusammenhalteffekt an einem gattungsgemäßen Laufrad zu realisieren.

Gelöst ist diese Aufgabe durch die im Anspruch 1 angegebene Erfindung.

Die Unteransprüche sind vorteilhafte Weiterbildungen des erfindungsgemäßen Laufrades.

Zufolge solcher Ausgestaltung ist mindestens unter Beibehaltung der hohen erreichten Zuordnungsfestigkeit der Bereifung am Felgenkörper mit einfachen Mitteln dem Problem der Hitzebeständigkeit bzw. Schwerentflammbarkeit begegnet. Der Sicherheitsstandard im Einsatzbereich entsprechender Laufräder wird damit deutlich angehoben bzw. das Anwendungsfeld für Laufrollen erweitert. Konkret ist so vorgegangen, daß der Felgenkörper aus einem halogenfreien Polypropylen-Copolymer und die Bereifung aus Polypropylen, vernetzt vulkanisiert mit einem EPDM-Kautschuk, besteht. Die entsprechende Kombination bzw. Paarung der Materialien trägt nicht nur dem angestrebten Hauptziel der Hitze- und Flammbeständigkeit Rechnung, sondern auch den Faktoren Zusammenhalt, also Ausschließen eines Schlupfes zwischen den radbildenden Bauteilen und der gewünschten hohen mechanischen Belastbarkeit. In bezug auf den Felgenkörper kann dabei auf das im Handel unter der Bezeichnung Polyflam RIPP 395 N D erhältliche Produkte zurückgegriffen werden, welches auch für den Spritzgußbereich gut geeignet ist und der UL-Norm 94 V 0 schon ab einer Wandstärke von 1,6 mm entspricht, also die Norm erfüllt. Dieser Werkstoff zeichnet sich auch sonst durch eine günstige Verarbeitungsbreite aus. Bedingt dadurch, daß die Flammschutzadditive halogenfrei sind, besitzt Polyflam RIPP 395 N D zugleich eine relativ gute UV-Beständigkeit. Darüber hinaus verursacht dieser Werkstoff keine korrosiven Eigenschaften, wenn er direkt einer Flamme ausgesetzt wird. Bezüglich des Materiales für die Bereifung eignet sich das im Handel unter der Bezeichnung "Santoprene" (251-80) geführte Produkt. Die sich bei einem eventuellen Brand entwickelnde Rauchdichte ist äußerst gering. Um diesbezüglich zu einer günstigen Ausgestaltung zu kommen, wird weiter vorgeschlagen, daß das Polypropylen Halogene und/oder Bromanteile aufweist. Diese chemischen Grundstoffe begünstigen die Rauchunterdrückung, so daß die Sicht in Gefahrenfällen gegeben ist. Vorteilhaft im Hinblick auf eine optimale Vernetzung beider Komponenten ist es weiter, daß die Bereifung auf eine oberflächenprofilierte Mantelfläche des Felgenkörpers unter Wärmeeinfluß aufgebracht ist. Will man überdies nicht nur einen beispielsweise zahnartigen Ineinandergriff der benachbarten Materialzonen, sondern auch noch eine vergrößerte Oberfläche mit einem entsprechend intensiverem Verbundeffekt erreichen, weist zweckmäßig die Oberflächenprofilierung eine derartige Graduierung auf, daß durch die Aufbring-Wärme Scheitelbereiche der Profilierung angelöst werden. Auch bei dieser in die Tiefe gehenden Verankerung genügt einfach die Aufbringwärme als Aktivator. Der entsprechende Anlöseeffekt geht so weit, daß bei einem gewaltsamen Trennen, wie dies an Hand von Versuchen ermittelt werden kann, überwiegend das relativ härtere Material des Felgenkörpers als Trenn- bzw. Spaltgrenze auftritt und nicht die echte Fuge zwischen den beiden das Laufrad bildenden Materialien. Der auch dem Ethylen-Propylen-Terpolymer-Kautschuk beigegebene Anteil an Polypropylen schafft, homogen verteilt, in beiden Komponenten gleichartige Verbundmaterialanteile.

Der Gegenstand der Erfindung ist nachstehend an Hand eines zeichnerisch veranschaulichten Ausführungsbeispieles näher erläutert. Es zeigt

Fig. 1 das erfindungsgemäße Laufrad in Draufsicht im Halbschnitt und
Fig. 2 die Seitenansicht hierzu.

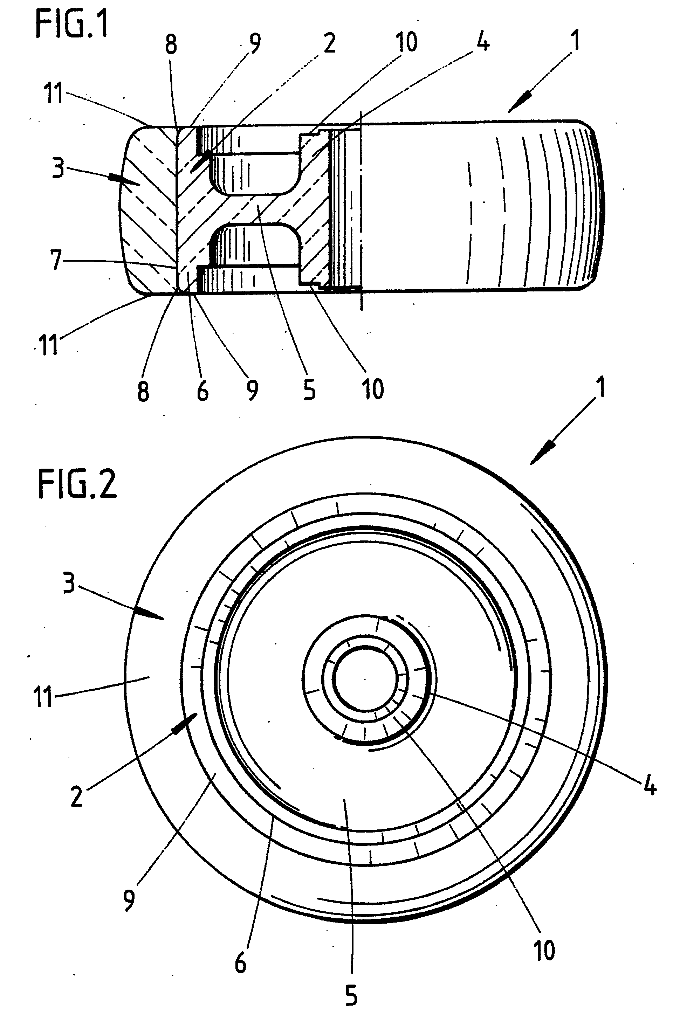

Das dargestellte Laufrad 1 besteht aus einem Felgenkörper 2 und einer auf diesen aufgespritzten Bereifung 3.

Der Felgenkörper weist die übliche zentrale Nabe 4 auf.

Die Nabe 4 geht außenseitig über einen symmetrischen Scheibensteg 5 in die eigentliche Felge 6 über. Deren das Felgenbett des Laufrades bildende Mantelfläche 7 definiert die Radbreite und geht felgenrandseitig über eine Querrundung 8 in die beiderseits des Scheibensteges 5 gleichmäßig vorragende Stirnfläche 9 des Felgenkörpers über. Es liegen praktisch die gleichen Walkverhältnisse über die gesamte Radbreit vor.

Die Stirnflächen 10 der Nabe 4 springen gegenüber der Stirnfläche 9 leicht zurück. Die Stirnflächen 10 sind konzentrisch gestuft.

Die Stirnflächen 11 der Bereifung 3 fluchten mit den Stirnflächen 9 des Felgenkörpers. Die eigentliche Lauffläche der Bereifung 3 weist eine schwach konvexe Wölbung auf, die über enge konvexe Querrundungen in die Stirnflächen 11 auslaufen.

Der Felgenkörper 2 besteht aus einem halogenfreien Polypropylen-Copolymer, Handelsname: Polyflam RIPP 395 N D. Dessen Eigenschaften stellen sich wie folgt dar:

| Dichte | DIN 53 479 | $g/cm^3$ | 1,02 |
|---|---|---|---|
| Wasseraufnahme nach 24 Std. | DIN 53 495 | % | 0,10 |
| Schmelzindex (MFI) | DIN 53 735 | g/10 min | 5 |
| Kerbschlagzähigkeit 23°C | ASTM D 256 | J/m | 65 |
| 0°C | ASTM D 256 | J/m | 65 |
| −40°C | ASTM D 256 | J/m | 36 |
| Zugfestigkeit | DIN 53 455 | $N/mm^2$ | 17 |
| Reißdehnung | DIN 53 455 | % | 28 |
| E-Modul | DIN 53 457 | $N/mm^2$ | 1400 |
| ISO/R Verfahren A | DIN 53 461 | °C | 62 |
| Vicat Erweichungspunkt B | DIN 53 460 | °C | 75 |
| Kugeldruckhärte o 2mm−125°C | VDE 0470/1,61 | mm | 1,75 |
| Flammwidrigkeit | UL 94 | 1,6 mm | UL−V−O |
| Limiting-Oxygen-Index | ASTM D 2863 | | 34 |
| Kriechstromfestigkeit | | | KC 600 |

Die Bereifung 3 besteht dagegen aus Polypropylen, vernetzt vulkanisiert mit einem EPDM-Kautschuk (Ethylen-Propylen-Terpolymer). Die Vernetzung zwischen beiden das Laufrad 1 bildenden Komponenten erfolgt unter dem Wärmeeinfluß der aufgebrachten Bereifung 3. Das Felgenbett (Mantelfläche 7) weist eine Rauhung auf in einer Graduierung derart, daß die Kautschuk-Aufbring-Wärme Scheitelbereiche der Rauhigkeitserhebungen anlöst. Die entsprechende Rauhung oder Mantelflächenprofilierung des Felgenkörpers 2 kann in Art querverlaufender Riefen realisiert sein. Auch ist eine Kreuzriefung denkbar. Letzteres führt zu vielen kleinen, in Reihe stehenden Pyramiden. Der Kerbtalwinkel solcher Riefen kann beispielsweise bei 90° liegen. Selbstverständlich lassen sich auch steilere Flanken vorsehen, so daß die Pyramiden spitzer ausfallen. Eine andere Art der Rauhung läßt sich durch Erosion erzielen. Die diesbezüglichen Ausführungen aus der genannten Patentanmeldung P 36 26 246.3 werden hier voll inhaltlich übernommen.

Der Handelsname des die Lauffläche bildenden Materials ist "Santoprene". Für den optimalen Selbstlöscheffekt hat sich die Qualität Santoprene 251-80 erwiesen.

Um außer den Eigenschaften der Schwerentflammbarkeit und Hitzebeständigkeit auch noch Eigenschaften im Hinblick auf eine besonders wirksame Rauchunterdrückung zu erzielen, wird vorgeschlagen, daß das Polypropylen Halogene und/oder Bromanteile aufweist.

**Patentansprüche**

1. Laufrad (1), insbesondere für Rollen, mit einem Felgenkörper (2) aus spritzgußfähigem Kunststoff und einer darauf aufgebrachten Bereifung (3) aus thermoplastischem Kautschuk, dadurch gekennzeichnet, daß der Felgenkörper (2) aus einem halogenfreien Polypropylen-Copolymer und die Bereifung (3) aus Polypropylen, vernetzt vulkanisiert mit einem EPDM-Kautschuk, besteht.

2. Laufrad nach Anspruch 1, dadurch gekennzeichnet, daß das Polypropylen der Bereifung (3) Anteile an Halogene und/oder Bromanteile aufweist.

3. Laufrad nach einem oder mehreren der vorhergehenden Ansprüche, dadurch gekennzeichnet, daß die Bereifung (3) auf eine oberflächenprofilierte Mantelfläche (7) des Felgenkörpers (2) unter Wärmeeinfluß aufgebracht ist.

4. Laufrad nach einem oder mehreren der vorhergehenden Ansprüche, dadurch gekennzeichnet, daß die Oberflächenprofilierung eine derartige Graduierung aufweist, daß die Kautschuk-Aufbring-Wärme Scheitelbereiche der Profilierung anlöst.

5. Laufrad nach einem oder mehreren der vorhergehenden Ansprüche, dadurch gekennzeichnet, daß die Profilierung als querverlaufende Riefung gestaltet ist.

**Claims**

1. Running wheel (1), in particular for rollers, having a rim body (2) of injection-mouldable plastic and a tyre (3) of thermoplastic rubber fitted thereupon, characterized in that the rim body (2) consists of a halogen-free polypropylene copolymer and the tyre (3) consists of polypropylene, crosslink-vulcanized with an EPDM rubber.

2. Running wheel according to claim 1, characterized in that the polypropylene of the tyre (3) contains fractions of halogens and/or bromine fractions.

3. Running wheel according to one or more of the preceding claims, characterized in that the tyre (3) is fitted on a surface-profiled circumferential area (7) of the rim body (2) under the influence of heat.

4. Running wheel according to one of more of the preceding claims, characterized in that the surface profiling has such a graduation that the rubber application heat begins to dissolve peak regions of the profiling.

5. Running wheel according to one of more of the preceding claims, characterized in that the profiling is produced in the form of transversely running grooving.

**Revendications**

1. Roue de roulement (1), notamment pour des galets, comprenant un corps de jante (2) en matière plastique moulable par injection et un bandage (3) en caoutchouc thermoplastique monté sur celle-ci, caractérisée en ce que le corps de jante (2) est constitué par un copolymère de polypropylène et le bandage (3) par du polypropylène vulcanisé réticulé avec un caoutchouc EPDM.

2. Roue de roulement selon la revendication 1, caractérisée en ce que le polypropylène du bandage (3) présente une proportion d'halogène et/ou une proportion de brome.

3. Roue de roulement selon l'une ou plusieurs des revendications qui précèdent, caractérisée en ce que le bandage (3) est appliqué sur une surface latérale (7) pourvue d'un profil du corps de jante (2) en faisant intervenir l'action de la chaleur.

4. Roue de roulement selon l'une ou plusieurs des revendications qui précèdent, caractérisée en ce que le profil de la surface présente une graduation telle que la chaleur d'application du caoutchouc dissout les zones de crête du profil.

5. Roue de roulement selon l'une ou plusieurs des revendications qui précèdent, caractérisée en ce que le profil est constitué par des stries s'étendant transversalement.

FIG.1

FIG.2